Europäisches Patentamt

European Patent Office

Office européen des brevets

(11) Numéro de publication: **0 241 325 B1**

(12) **FASCICULE DE BREVET EUROPEEN**

(45) Date de publication de fascicule du brevet: **12.08.92** (51) Int. Cl.⁵: **H01R 25/16**

(21) Numéro de dépôt: **87400505.1**

(22) Date de dépôt: **09.03.87**

(54) **Support adaptateur pour appareillage électrique.**

(30) Priorité: **10.03.86 FR 8603334**

(43) Date de publication de la demande:
**14.10.87 Bulletin 87/42**

(45) Mention de la délivrance du brevet:
**12.08.92 Bulletin 92/33**

(84) Etats contractants désignés:
**AT BE DE ES FR GB GR IT NL**

(56) Documents cités:
**EP-A- 0 159 554**
**FR-A- 1 367 235**
**FR-A- 1 552 492**
**GB-A- 2 137 025**

(73) Titulaire: **LEGRAND**
**128 Avenue du Maréchal de Lattre de Tassigny**
**F-87045 Limoges Cédex(FR)**

(72) Inventeur: **Marcou, Jean-Claude**

**F-72140 Rouesse Vasse(FR)**
Inventeur: **Buard, Yvon**
**Voutre**
**F-53600 Evron(FR)**

(74) Mandataire: **CABINET BONNET-THIRION**
**95 Boulevard Beaumarchais**
**F-75003 Paris(FR)**

Rank Xerox (UK) Business Services

## Description

La présente invention concerne d'une manière générale les supports pour appareillages électriques, et elle vise plus particulièrement ceux de ces supports, dits supports adaptateurs, couramment mis en oeuvre pour faciliter l'implantation de tels appareillages électriques au voisinage immédiat des conduits, tels que moulure, plinthe ou analogue, dans lesquels courent, en y étant protégés, les conducteurs électriques nécessaires à leur desserte.

Globalement, un tel support adaptateur comporte un corps, qui est propre au logement du mécanisme de l'appareillage électrique concerné, qu'il s'agisse par exemple d'un interrupteur ou qu'il s'agisse d'une prise de courant ou d'un quelconque autre appareillage électrique, et qui comporte lui-même une semelle, et, bordant celle-ci sur une partie au moins de sa périphérie, et sur une hauteur suffisante compte tenu du mécanisme concerné, un cadre.

Lorsqu'un appareillage électrique est implanté latéralement par rapport au conduit qui le dessert, il est usuel d'associer au support adaptateur correspondant, pour la continuité de protection à assurer pour les conducteurs électriques concernés, un prolongement en forme d'auvent apte à coiffer un tel conduit, en s'étendant transversalement par dessus celui-ci, et en se substituant localement à son couvercle, ce qui permet d'éliminer localement ce couvercle sur une longueur suffisante pour une sortie latérale des conducteurs électriques.

Il a déjà été proposé, et c'est le cas par exemple dans le brevet français FR-A- 1.552.492, de dissocier du support adaptateur un tel auvent, pour pouvoir le rapporter à la demande sur le cadre de celui-ci.

A cet effet, l'un au moins des côtés de ce cadre est au moins en partie évidé, avec, en bordure de l'évidement correspondant, des moyens d'engagement, l'auvent associé comportant lui-même des moyens d'engagement par lesquels il est apte à venir en prise avec les précédents.

Lorsque, en variante de la disposition précédente, l'implantation d'un appareillage électrique doit se faire en bout du conduit qui le dessert, cet auvent n'a pas son utilité.

Le support adaptateur ne peut alors lui-même pas non plus convenir, sauf, à la rigueur, si, par extraordinaire, les dimensions de l'évidement de son cadre correspondent exactement à celles du conduit concerné.

Il résulte de ce qui précède que, à ce jour, il est nécessaire de disposer de manière dispendieuse d'un nombre élevé de supports adaptateurs différents dont chacun est adapté à un mode d'implantation déterminé par rapport à un conduit et/ou à une largeur de conduit déterminée.

La présente invention a d'une manière générale pour objet une disposition permettant au contraire de minimiser le nombre de supports adaptateurs ainsi nécessaires.

De manière plus précise, elle a pour objet un support adaptateur pour appareillage électrique, du genre comportant un corps, qui est propre au logement du mécanisme de l'appareillage électrique, et qui comporte lui-même une semelle, et, bordant celle-ci, un cadre dont l'un au moins des côtés, dit ci-après par simple commodité côté ajouré, est au moins en partie évidé, avec, en bordure de l'évidement correspondant, des moyens d'engagement, ce support adaptateur étant d'une manière générale caractérisé en ce qu'il est associé au corps un flasque de fermeture, qui forme une pièce distincte du cadre dudit corps, et qui, doté de moyens d'engagement par lesquels il est apte à venir en prise avec les moyens d'engagement que comporte ce corps, est apte à occulter l'évidement du côté ajouré du cadre dudit corps sur une partie au moins de la hauteur dudit évidement, et en ce que ce flasque de fermeture comporte au moins une ligne de prédécoupe propre à permettre d'en détacher un panneau.

Le flasque de fermeture ainsi mis en oeuvre peut très aisément être substitué à un auvent lorsque l'implantation du support adaptateur se fait en bout d'un conduit.

En outre, ce flasque de fermeture comportant, en pratique, à sa base, disposées concentriquement les unes autour des autres à compter du bord de celle-ci, plusieurs lignes de prédécoupe en arceau, il suffit alors de défoncer, dans ce flasque de fermeture, suivant les dimensions du conduit concerné, tel ou tel des panneaux délimités par l'une ou l'autre des lignes de prédécoupe qu'il comporte.

Le support adaptateur suivant l'invention peut ainsi s'adapter avantageusement à des conduits de dimensions différentes.

En outre, du fait du caractère amovible du flasque de fermeture alors concerné, les manipulations à assurer pour cette adaptation se trouvent avantageusement facilitées.

En effet, la découpe à assurer est plus aisée à pratiquer sur un tel flasque de fermeture, pris isolément, que sur le côté d'un cadre rigidement d'un seul tenant avec d'autres constituants.

Il en est de même pour le câblage des conducteurs électriques correspondants.

Les caractéristiques et avantages de l'invention ressortiront d'ailleurs de la description qui va suivre, à titre d'exemple, en référence aux dessins schématiques annexés sur lesquels :

la figure 1 est une vue en perspective d'un support adaptateur représenté en place au côté d'un conduit ;

la figure 2 est une vue en perspective éclatée d'un tel support adaptateur lorsque, suivant l'invention, il lui est associé un flasque de fermeture ;

la figure 3 est, suivant la flèche III de la figure 2, et avec un arrachement local, une vue partielle en élévation du corps de ce support adaptateur ;

la figure 4 est une vue partielle en plan de ce corps, suivant la flèche IV de la figure 3 ;

la figure 5 est, suivant la ligne V-V de la figure 2, une vue en coupe longitudinale du flasque de fermeture prévu suivant l'invention ;

la figure 6 est une vue en plan de ce flasque de fermeture, suivant la flèche VI de la figure 5 ;

la figure 7 reprend, à échelle supérieure, le détail de la figure 5 repéré par un encart VII sur cette figure 5 ;

la figure 8 est une vue en plan analogue à celle de la figure 6, après découpe d'un panneau dans le flasque de fermeture concerné ;

la figure 9 est une vue en perspective analogue à celle de la figure 1, le support adaptateur suivant l'invention étant représenté en place en bout d'un conduit.

Tel qu'illustré sur ces figures, il s'agit, d'une manière générale, de la desserte d'un quelconque appareillage électrique 10 à implanter sur une quelconque base 11, un mur par exemple, sur laquelle court également un quelconque conduit 12, une moulure par exemple, servant de logement aux conducteurs électriques nécessaires à cette desserte et assurant ainsi la protection de ces derniers.

Dans l'application illustrée, l'appareillage électrique 10 concerné est plus particulièrement, à titre d'exemple, un interrupteur.

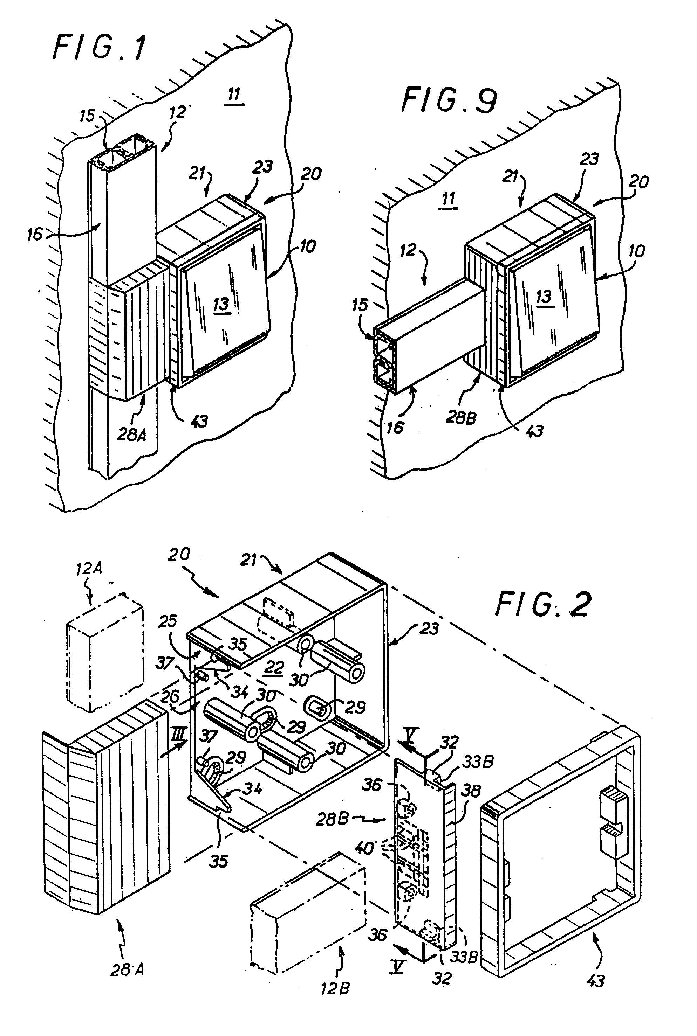

En pratique, seule est visible à la figure 1, la touche de commande 13 d'un tel interrupteur.

Cet interrupteur ne faisant pas par lui-même l'objet de la présente invention, il ne sera pas décrit plus en détail ici.

Il en est de même en ce qui concerne le conduit 12.

Il suffira d'indiquer que, de manière usuelle, ce conduit 12 comporte un corps 15, et, encliqueté sur celui-ci, un couvercle 16.

De manière connue en soi, il est mis en oeuvre, pour l'implantation de l'appareillage électrique 10 sur la base 11 à équiper, ce qu'il est convenu d'appeler un support adaptateur 20.

De manière également connue en soi, ce support adaptateur 20 comporte, globalement, un corps 21, qui est propre au logement du mécanisme de l'appareillage électrique 10 concerné, et qui comporte lui-même une semelle 22, et, bordant celle-ci, sur une partie au moins de sa périphérie, un cadre 23.

En pratique, le corps 21 a, globalement, un contour quadrangulaire, à angle éventuellement arrondi.

Son cadre 23 aussi bien que sa semelle 22, comportent donc quatre côtés.

Dans la forme de réalisation représentée, le cadre 23 est d'un seul tenant avec la semelle 22.

L'un au moins des côtés du cadre 23 que présente ainsi le corps 21, dit ci-après par simple commodité côté ajouré 25, est, pour des raisons qui apparaîtront ultérieurement, au moins en partie évidé, avec, pour le corps 21, en bordure de l'évidement 26 correspondant, des moyens d'engagement également détaillés ultérieurement.

Le cadre 23 étant d'un seul tenant avec la semelle 22, l'évidement 26 de son côté ajouré 25 est ouvert en direction opposée à cette semelle 22.

Bien entendu, des moyens de fixation, non représentés, sont prévus pour assujettir le corps 21 à la base 11 à équiper.

Il peut s'agir par exemple de vis, des perçages 29 étant prévus, pour leur passage, aux quatre angles de la semelle 22 de ce corps 21, aussi bien qu'à d'autres endroits de celle-ci.

Dans la forme de réalisation représentée, cette semelle 22 comporte, en outre, en saillie, des puits 30 propres à la mise en oeuvre de moyens de fixation, en pratique des vis, permettant d'y rapporter le mécanisme de l'appareillage électrique concerné.

Lorsque, tel que représenté à la figure 1 et schématisé en traits interrompus en 12A, à la figure 2, l'implantation de l'appareillage électrique 10 doit se faire latéralement par rapport au conduit 12 concerné, le support adaptateur 20 correspondant étant alors accolé par son corps 21 à un tel conduit 12, il est associé, à ce corps 21, un auvent 28A, qui, propre à coiffer ce conduit 12, est apte à s'engager dans l'évidement 26 du côté ajouré 25 du cadre 23 d'un tel corps 21.

Cette disposition ne faisant pas l'objet de la présente invention, elle ne sera pas décrite plus en détail ici.

Lorsque, en variante de la disposition précédente, et tel que schématisé en 12B sur la figure 2 et représenté à la figure 9, l'implantation de l'appareillage électrique 10 doit se faire en bout du conduit 12 concerné, il est mis en oeuvre, suivant l'invention, un flasque de fermeture 28B.

Ce flasque de fermeture 28B forme une pièce distincte du cadre 23 du corps 21, et, de contour globalement quadrangulaire et doté de moyens d'engagement, détaillés ci-après, par lesquels il est apte à venir en prise avec les moyens d'engagement que comporte ce corps 21, il est apte à occulter l'évidement 26 du côté ajouré 25 du cadre 23 de ce corps 21 sur une partie au moins de la hauteur de cet évidement 26.

En pratique, dans la forme de réalisation représentée, le flasque de fermeture 28 est apte à occulter l'évidement 26 sur la totalité de la hauteur de celui-ci.

Les moyens d'engagement dont il est doté comportent deux languettes 33B, qui, allongées sensiblement parallèlement à son plan, sont chacune portées par une patte 32, et, en correspondance, les moyens d'engagement dont est doté conjointement le corps 21 comportent eux-mêmes deux languettes 34, qui sont solidaires de ce corps 21, en s'étendant sensiblement perpendiculairement à la semelle 22 de celui-ci, et dont chacune ménage entre son extrémité libre, au moins, et le côté du cadre 23 de ce corps 21 qui en est proche, une saignée 35 propre au passage de la patte 32 de la languette 33B correspondante du flasque de fermeture 28B, en sorte que, par ses languettes 33B, ce flasque de fermeture 28B est apte à se crocheter sur les languettes 34 du corps 21.

Dans la forme de réalisation représentée, les languettes 33B du flasque de fermeture 28B sont disposées chacune respectivement au voisinage de ses extrémités, sensiblement à mi-hauteur de ses bords latéraux, les pattes 32 correspondantes s'étendant en pratique au ras de ces derniers.

Conjointement, les languettes 34 du corps 21 sont disposées chacune respectivement de part et d'autre de l'évidement 26 du côté ajouré 25 de son cadre 23.

Dans la forme de réalisation représentée, ces languettes 34 s'étendent à compter de la semelle 22 du corps 21, d'un seul tenant avec cette semelle 22, le long du bord correspondant de celle-ci, mais légèrement en retrait par rapport à ce bord, et elles ont, en élévation, un contour globalement trapézoïdal.

En outre, dans cette forme de réalisation, la saignée 35 qui les sépare du côté du cadre 23 le plus proche ne s'étend que sur une partie de leur hauteur, et elle se raccorde donc d'un seul tenant à ce côté du cadre 23 sur le reste de leur hauteur.

Dans la forme de réalisation représentée, le flasque de fermeture 28B est renforcé, à sa base, par au moins un ergot 36.

En pratique, deux ergots 36 sont ainsi prévus, en saillie sur sa face interne, à distance l'un de l'autre, parallèlement à sa base, mais légèrement en retrait par rapport à celle-ci.

Chacun d'eux forme une oreille, pour engagement sur un pion 37 prévu, en correspondance, en saillie sur la semelle 22 du corps 21, sensiblement perpendiculairement à cette semelle 22.

Le long de son bord opposé à ces ergots 36, et il s'agit donc de son bord supérieur, le flasque de fermeture 28B présente, en outre, en équerre, dans la forme de réalisation représentée, et dans le même sens que les ergots 36, un rebord 38.

Enfin, le flasque de fermeture 28B comporte au moins une ligne de prédécoupe 40 propre à permettre d'en détacher un panneau.

En pratique, dans la forme de réalisation représentée, il comporte ainsi, à sa base, disposées concentriquement les unes autour des autres à compter du bord de celle-ci, plusieurs lignes de prédécoupe 40 en arceau.

Par exemple, et tel que représenté, ces lignes de prédécoupe 40 résultent du recoupement deux à deux, d'une part, de lignes de prédécoupe 41, qui s'étendent parallèlement aux bords latéraux du flasque de fermeture 28B, et, d'autre part, de lignes de prédécoupe 42, qui, d'équerre avec les précédentes, s'étendent parallèlement à sa base.

Dans la forme de réalisation représentée, il y a ainsi huit lignes de prédécoupe 41, disposées symétriquement deux à deux de part et d'autre de la zone centrale du flasque de fermeture 28B, et trois lignes de prédécoupe 42.

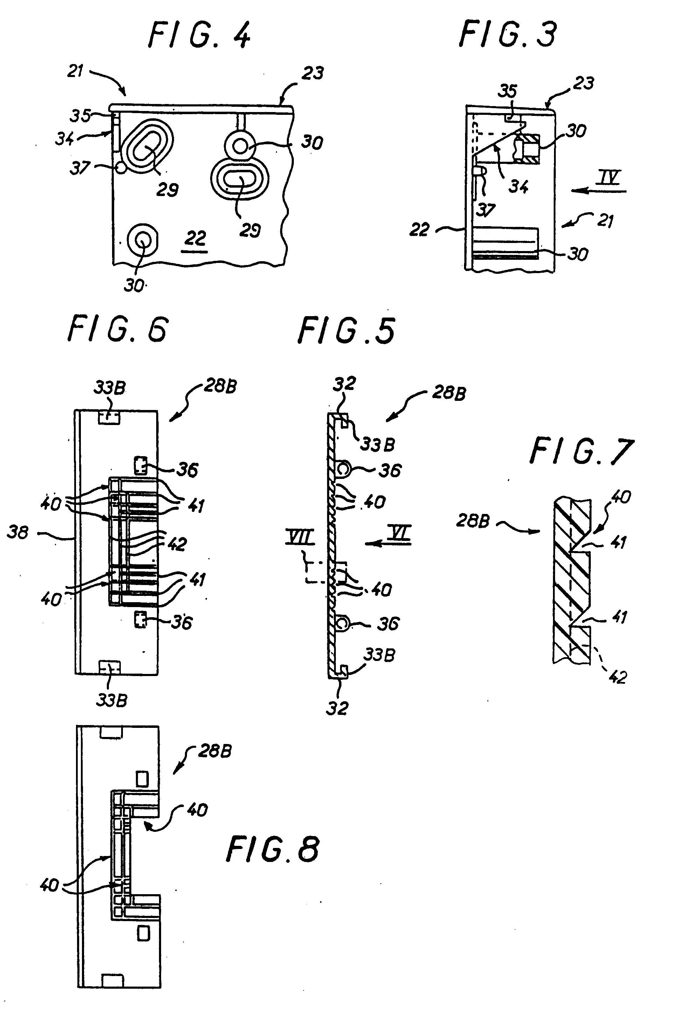

Ainsi qu'il est mieux visible à la figure 7 pour certaines d'entre elles, chacune d'elles correspond à une zone de moindre épaisseur résultant d'une saignée qui, présente sur la face interne du flasque de fermeture 28B, a transversalement un profil triangulaire.

Les lignes de prédécoupe 41 parallèles aux bords latéraux du flasque de fermeture 28B s'étendent à compter de la base de celui-ci, et, pour la plupart, elles se poursuivent jusqu'à celle des lignes de prédécoupe 42 qui est la plus éloignée de cette base.

Les lignes de prédécoupe en arceau 42 ainsi constituées sont établies suivant des implantations propres à correspondre aux dimensions les plus courantes pour les conduits 12 susceptibles d'être concernés.

Lorsque, tel que schématisé en traits interrompus en 12B à la figure 2 et tel que représenté en traits pleins à la figure 9, le support adaptateur 20 suivant l'invention doit être implanté en bout d'un tel conduit 12, il est procédé au défonçage, dans le flasque de fermeture 28B suivant l'invention, et suivant une ligne de prédécoupe en arceau 40 correspondant au profil de ce conduit 12, du panneau délimité par une telle ligne de prédécoupe 40, figure 8.

Ainsi qu'il est aisé de le comprendre, ce défonçage se trouve facilité par le fait qu'il porte sur une simple plaquette, à savoir le flasque de fermeture 28B, et non pas sur une pièce plus massive moins aisée à manipuler.

De même, le câblage de l'appareillage électrique concerné se trouve facilité, en raison du fait qu'il peut ainsi être réalisé en l'absence d'un tel flasque de fermeture 28B, avant la mise en place de celui-ci.

Une fois ce câblage réalisé, le flasque de fermeture 28B est engagé, par ses pattes 32, dans les saignées 35 du corps 21.

Les dispositions sont telles, tant en ce qui concerne l'implantation des pattes 32 du flasque de fermeture 28B qu'en ce qui concerne l'implantation et la hauteur des saignées 35 du corps 21, que, au terme de cet engagement, le flasque de fermeture 28B reconstitue, tout en entourant le débouché du conduit 12, le côté manquant du cadre 23 de ce corps 21, son rebord 38 venant alors sensiblement à ras avec le bord correspondant de ce cadre 23, en faisant saillie vers l'intérieur de celui-ci.

En particulier, et ainsi qu'on le notera à la figure 2, les languettes 34 du corps 21 étant établies légèrement en retrait par rapport au bord correspondant de sa semelle 22, d'une quantité sensiblement égale à l'épaisseur du flasque de fermeture 28B, celui-ci, une fois en place, se fond avec les autres côtés du cadre 23 de ce corps 21.

Enfin, dans la forme de réalisation représentée, il est associé, par ailleurs, au cadre 23, une rehausse 43, en une ou deux parties.

Cette rehausse 43 est facultative.

Bien entendu, la présente invention ne se limite d'ailleurs pas à la forme de réalisation décrite et représentée, mais englobe toute variante d'exécution dans le cadre des revendications.

En particulier, il peut être prévu un flasque de fermeture amovible et distinct sur deux ou plusieurs des côtés du corps du support adaptateur concerné, pour permettre l'implantation de celui-ci suivant deux ou plusieurs configurations distinctes.

## Revendications

1. Support adaptateur pour appareillage électrique, du genre comportant un corps (21), qui est propre au logement du mécanisme d'un tel appareillage électrique, et qui comporte lui-même une semelle (22), et, bordant celle-ci, un cadre (23) dont l'un au moins des côtés, dit ci-après par simple commodité côté ajouré (25), est au moins en partie évidé, avec, en bordure de l'évidement (26) correspondant, des moyens d'engagement (34), caractérisé en ce qu'il est associé au corps (21) un flasque de fermeture (28B), qui forme une pièce distincte du cadre (23) dudit corps (21), et qui, doté de moyens d'engagement (33B) par lesquels il est apte à venir en prise avec les moyens d'engagement (34) que comporte le corps (21), est apte à occulter l'évidement (26) du côté ajouré (25) du cadre (23) dudit corps (21) sur une partie au moins de la hauteur dudit évidement (26), et en ce que ce flasque de fermeture (28B) comporte au moins une ligne de prédécoupe (40) propre à permettre d'en détacher un panneau.

2. Support adaptateur suivant la revendication 1, caractérisé en ce que le flasque de fermeture (28B) qui lui est associé est apte à occulter l'évidement (26) du côté ajouré (25) du cadre (23) du corps (21) sur toute la hauteur dudit évidement (26).

3. Support adaptateur suivant l'une quelconque des revendications 1,2, caractérisé en ce que le flasque de fermeture (28B) qui lui est associé comporte, à sa base, disposées concentriquement les unes autour des autres à compter du bord de celle-ci, plusieurs lignes de prédécoupe (40) en arceau.

4. Support adaptateur suivant l'une quelconque des revendications 1 à3, caractérisé en ce que le flasque de fermeture (28B) qui lui est associé est renforcé par au moins un ergot (36) à sa base.

5. Support adaptateur suivant la revendication 4, caractérisé en ce que ledit ergot (36) forme une oreille, pour engagement sur un pion (37) prévu, en correspondance, en saillie sur la semelle (22) du corps (21).

6. Support adaptateur suivant l'une quelconque des revendications 4,5, caractérisé en ce que deux ergots (36) sont prévus, à distance l'un de l'autre, sur la face interne du flasque de fermeture (28B).

7. Support adaptateur suivant l'une quelconque des revendications 1 à 6, caractérisé en ce que les moyens d'engagement (33B) du flasque de fermeture (28B) comportent deux languettes (33B), qui, allongées sensiblement parallèlement à son plan, sont chacune portées par une patte (32), et, en correspondance, les moyens d'engagement (34) dont est doté conjointement ce corps (21) comportent eux-mêmes deux languettes (34) qui sont solidaires dudit corps (21), en s'étendant sensiblement perpendiculairement à la semelle (22) de celui-ci, et dont chacune ménage entre son extrémité libre, au moins, et le côté du cadre (23) dudit corps (21) qui en est proche, une saignée (35) propre au passage de la patte (32) de la languette (33B) correspondante du flasque de fermeture (28B), en sorte que, par ses languettes (33B), ledit flasque de fermeture (28B) est apte à se crocheter sur les languettes (34) du corps (21).

**8.** Support adaptateur suivant la revendication 7, caractérisé en ce que les languettes (33B) du flasque de fermeture (28B) sont disposées chacune respectivement au voisinage de ses extrémités.

**9.** Support adaptateur suivant la revendication 7, caractérisé en ce que les languettes (34) du corps (21) sont disposées chacune respectivement de part et d'autre de l'évidement (26) du côté ajouré (25) de son cadre (23).

**10.** Support adaptateur suivant la revendication 9, caractérisé en ce que les languettes (34) du corps (21) s'étendent à compter de sa semelle (22).

**11.** Support adaptateur suivant l'une quelconque des revendications 1 à 10, caractérisé en ce que le cadre (23) du corps (21) est d'un seul tenant avec sa semelle (22), l'évidement (26) du côté ajouré (25) dudit cadre (23) étant ouvert en direction opposée à ladite semelle (22).

**Claims**

**1.** An adaptor support for electrical equipment, of the kind comprising a body (21) which is capable of accommodating the mechanism of such an item of electrical equipment, and which itself comprises a base plate (22) and, bordering same, a frame (23) of which one at least of the sides, referred to hereinafter for the sake of convenience as the apertured side (25), is at least partly cut away, with, at the edge of the corresponding opening (26), engagement means (34), characterised in that associated with the body (21) is a closure side plate (28B) which forms a separate part from the frame (23) of said body (21) and which, provided with engagement means (33B) by which it is capable of coming into engagement with the engagement means (34) which are provided on the body (21), is capable of closing the opening (26) in the apertured side (25) of the frame (23) of said body (21) over a part at least of the height of said opening (26), and that said closure side plate (28B) comprises at least one pre-cutout line (40) for permitting detachment of a panel therefrom.

**2.** An adaptor support according to claim 1 characterised in that the closure side plate (28B) which is associated therewith is capable of closing the opening (26) in the apertured side (25) of the frame (23) of the body (21) over the entire height of said opening (26).

**3.** An adaptor support according to either one of claims 1 and 2 characterised in that the closure side plate (28B) which is associated therewith comprises, at its base, a plurality of pre-cutout lines (40) of arcuate configuration, which are disposed concentrically around each other from the edge of the closure side plate.

**4.** An adaptor support according to any one of claims 1 to 3 characterised in that the closure side plate (28B) which is associated therewith is reinforced by at least one lug (36) at its base.

**5.** An adaptor support according to claim 4 characterised in that said lug (36) forms an ear for engagement on to a pin (37) provided at a corresponding position in projecting relationship on the base plate (22) of the body (21).

**6.** An adaptor support according to either one of claims 4 and 5 characterised in that two lugs (36) are provided at a spacing from each other on the internal face of the closure side plate (28B).

**7.** An adaptor support according to any one of claims 1 to 6 characterised in that the engagement means (33B) of the closure side plate (28B) comprise two tongue portions (33B) which, being elongate substantially parallel to its plane, are each carried by an arm portion (33) and, at a corresponding position, the engagement means (34) with which said body (21) is jointly provided themselves comprise two tongue portions (34) which are fixed with respect to said body (21), extending substantially perpendicularly to the base plate (22) thereof, and each of which provides between its free end at least and the side of the frame (23) of said body (21) which is towards same, a groove (35) for passage of the arm portion (32) of the corresponding tongue portion (33B) of the closure side plate (28B), in such a way that by means of its tongue portions (33B) the closure side plate (28B) is capable of coming into latching engagement on the tongue portions (34) of the body (21).

**8.** An adaptor support according to claim 7 characterized in that the tongue portions (33B) of the closure side plate (28B) are each disposed respectively in the vicinity of its ends.

**9.** An adaptor support according to claim 7 characterised in that the tongue portions (34) of the body (21) are each disposed on respective sides of the opening (26) in the apertured side (25) of its frame (23).

10. An adaptor support according to claim 9 characterised in that the tongue portions (34) of the body (21) extend from its base plate (22).

11. An adaptor support according to any one of claims 1 to 10 characterised in that the frame (23) of the body (21) is in one piece with its base plate (22), the opening (26) in the apertured side (25) of said frame (23) being open in the opposite direction to said base plate (22).

**Patentansprüche**

1. Adapterträger für elektrisches Gerät mit einem Körper (21), der die Aufnahme des Mechanismus eines solchen elektrischen Geräts gestattet und eine Bodenplatte (22) und einen diese umrandende Rahmen (23) umfaßt, von dem wenigstens eine der Seiten, im nachstehenden der Einfachheit halber durchbrochen Seite (25) genannt, wenigstens zum Teil ausgespart ist und als Umrandung der entsprechenden Aussparung (26) Eingriffsmittel (34) besitzt, dadurch gekennzeichnet, daß dem Körper (21) ein Verschlußschild (28B) zugeordnet ist, der ein vom Rahmen (23) des Körpers (21) getrenntes Teil bildet, mit Eingriffsmitteln (33B) versehen ist, durch die er mit den Eingriffsmitteln (34), die der Körper (21) besitzt, in Eingriff kommen kann, und die Aussparung (26) der durchbrochenen Seite (25) des Rahmens (23) des Körpers (21) wenigstens auf einem Teil der Höhe der Aussparung (26) abdecken kann, und daß dieser Verschlußschild (28B) wenigstens eine Vorstanzlinie (40) umfaßt, die es gestattet, von ihm eine Platte abzulösen.

2. Adapterträger nach Anspruch 1, dadurch gekennzeichnet, daß der ihm zugeordnete Verschlußschild (28B) die Aussparung (26) der durchbrochenen Seite (25) des Rahmens (23) des Körpers (21) auf der ganzen Höhe der Aussparung (26) abdecken kann.

3. Adapterträger nach einem der Ansprüche 1, 2, dadurch gekennzeichnet, daß der ihm zugeordnete Verschlußschild (28B) an seiner Basis mehrere bogenförmige Vorstanzlinien (40) umfaßt, die von seinem Rand an konzentrisch zueinander angeordnet sind.

4. Adapterträger nach einem der Ansprüche 1 bis 3, dadurch gekennzeichnet, daß der ihm zugeordnete Verschlußschild (28B) durch wenigstens einen Vorsprung (36) an seiner Basis verstärkt ist.

5. Adapterträger nach Anspruch 4, dadurch gekennzeichnet, daß der Vorsprung (36) eine Öse zum Aufstecken auf einen Stift (37) formt, der in Entsprechung hervorstehend auf der Bodenplatte (22) des Körpers (21) vorgesehen ist.

6. Adapterträger nach einem der Ansprüche 4, 5, dadurch gekennzeichnet, daß zwei Vorsprünge (36) in einem Abstand voneinander auf der Innenfläche des Verschlußschilds (28B) vorgesehen sind.

7. Adapterträger nach einem der Ansprüche 1 bis 6, dadurch gekennzeichnet, daß die Eingriffsmittel (33B) des Verschlußschilds (28B) zwei Zungen (33B) umfassen, die sich im wesentlichen parallel zu seiner Ebene erstrecken und jeweils von einem Lappen (32) getragen sind, und daß die Eingriffsmittel (34B), mit denen gleichzeitig dieser Körper (21) versehen ist, in Entsprechung ihrerseits zwei Zungen (34) besitzen, die an dem Körper (21) befestigt sind und sich im wesentlichen senkrecht zu dessen Bodenplatte (22) erstrecken und deren jede wenigstens zwischen ihrem freien Ende und der Seite des Rahmens (23) des Körpers (21), die ihr nahe ist, einen Schlitz (35) freiläßt, der den Durchgang des Lappens (32) der entsprechenden Zunge (33B) des Verschlußschilds (28B) gestattet, so daß der Verschlußschild (28B) sich mit seinen Zungen (33B) in die Zungen (34) des Körpers (21) einhaken kann.

8. Adapterträger nach Anspruch 7, dadurch gekennzeichnet, daß die Zungen (33B) des Verschlußschilds (28B) jeweils in Nähe seiner Enden angeordnet sind.

9. Adapterträger nach Anspruch 7, dadurch gekennzeichnet, daß die Zungen (34) des Körpers (21) jeweils zu beiden Seiten der Aussparung (26) der durchbrochenen Seite (25) seines Rahmens (23) angeordnet sind.

10. Adapterträger nach Anspruch 9, dadurch gekennzeichnet, daß die Zungen (34) des Körpers (21) sich von seiner Bodenplatte (22) aus erstrecken.

11. Adapterträger nach einem der Ansprüche 1 bis 10, dadurch gekennzeichnet, daß der Rahmen (23) des Körpers (21) mit seiner Bodenplatte (22) einstückig ausgebildet ist, wobei die Aussparung (26) der durchbrochenen Seite (25) des Rahmens (23) in der Bodenplatte (22) ent-

gegengesetzter Richtung offen ist.

FIG.1

FIG.9

FIG.2

## FIG. 4

## FIG.3

## FIG. 6

## FIG.5

## FIG.7

## FIG.8